# EUROPEAN PATENT APPLICATION

(11) **EP 4 661 107 A1**
(43) Date of publication of application: **10.12.2025**
(21) Application number: 24750071.3
(22) Date of filing: 24.01.2024
(51) Int. Cl.: H01M 4/525, C01G 53/00, H01M 4/505

(54) **POSITIVE ELECTRODE ACTIVE MATERIAL FOR NON-AQUEOUS ELECTROLYTE SECONDARY BATTERY, AND NON-AQUEOUS ELECTROLYTE SECONDARY BATTERY**

(30) Priority: 31.01.2023 JP 2023012825
(71) Applicant: Panasonic Intellectual Property Management Co., Ltd., Kadoma-shi, Osaka 571-0057 (JP)
(72) Inventor: ESAKI, Shogo, Kadoma-shi, Osaka 571-0057 (JP); HIBINO, Mitsuhiro, Kadoma-shi, Osaka 571-0057 (JP)
(74) Representative: Novagraaf International SA
(86) International application number: PCT/JP2024/001966
(87) International publication number: WO 2024/162121

(57) **Abstract**

A positive electrode active material for a non-aqueous electrolyte secondary battery according to the present invention has a crystal structure belonging to space group R-3m and is represented by the compositional formula Li_{α}Na_{β}Ni_{1-b-c}Mn_{b}X_{c}O_{2-d}, wherein X is at least one element selected from the group consisting of typical elements and transition metal elements other than Li, Na, Ni, and Mn, 0.80 < α ≤ 1.20, 0 < β ≤ 0.20, 0.80 < α + β ≤ 1.20, 0 < 1-b-c ≤ 1, 0 ≤ b < 1, 0 ≤ c < 1, and 0 < d ≤ 0.2.

## Description

### TECHNICAL FIELD

The present disclosure relates to a positive electrode active material for a non-aqueous electrolyte secondary battery and a non-aqueous electrolyte secondary battery using this positive electrode active material.

### BACKGROUND ART

In non-aqueous electrolyte secondary batteries such as lithium-ion secondary batteries, many studies have been made on a positive electrode active material since the positive electrode active material has a significant influence on battery performance such as input/output characteristics, capacity, and durability. For the positive electrode active material, a lithium-transition metal composite oxide containing a transition metal element such as Ni or Mn is generally used. The type and added amounts of elements contained in the lithium-transition metal composite oxide, the crystal structure of the composite oxide, and the like significantly affect the battery performance, and even a slight change in these physical properties may fail to achieve the desired performance.

For example, Patent Literatures 1 to 3 disclose that a predetermined amount of oxygen deficiency is introduced into a lithium-transition metal composite oxide of a specific composition having a layered structure for the purpose of improving battery performance such as an increase in capacity.

### CITATION LIST

### PATENT LITERATURE

PATENT LITERATURE 1: Japanese Unexamined Patent Application Publication No. 2002-063903
PATENT LITERATURE 2: Japanese Unexamined Patent Application Publication No. 2002-060223
PATENT LITERATURE 3: Japanese Unexamined Patent Application Publication No. 2003-051311

### SUMMARY

In recent years, non-aqueous electrolyte secondary batteries, such as lithium-ion secondary batteries, have been used as power sources for driving vehicles, and required to have even higher capacities. The positive electrode active materials of Patent Literatures 1 to 3 still have much room for improvement from the viewpoint of an increase in capacity.

A positive electrode active material for a non-aqueous electrolyte secondary battery according to the present disclosure is a positive electrode active material for a non-aqueous electrolyte secondary battery, having a crystal structure belonging to the space group R-3m, and being represented by a compositional formula Li_{α}Na_{β}Ni_{1-b-c}Mn_{b}X_{c}O_{2-d}, wherein X represents at least one selected from the group consisting of transition metal elements or main-group elements other than Li, Na, Ni, and Mn; and 0.80 < α ≤ 1.20, 0 < β ≤ 0.20, 0.80 < α + β ≤ 1.20, 0 < 1-b-c ≤ 1, 0 ≤ b < 1, 0 ≤ c < 1, and 0 < d ≤ 0.2 are satisfied.

A non-aqueous electrolyte secondary battery according to the present disclosure comprises: a positive electrode including the above positive electrode active material; a negative electrode; and a non-aqueous electrolyte.

According to the positive electrode active material of the present disclosure, increase in capacity of the non-aqueous electrolyte secondary battery can be achieved.

### BRIEF DESCRIPTION OF DRAWING

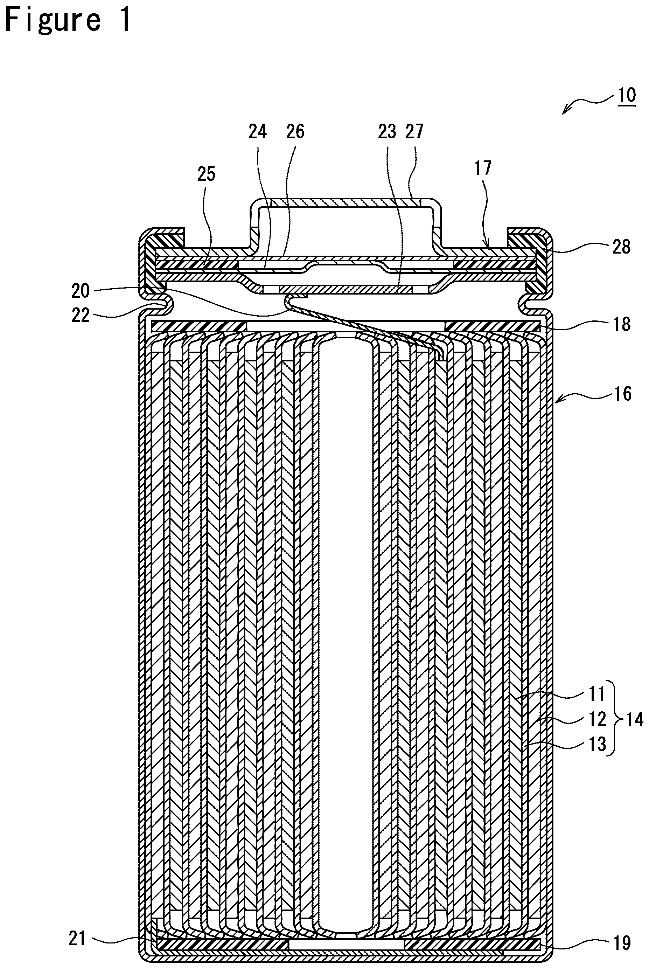

FIG. 1 is a longitudinal sectional view of a non-aqueous electrolyte secondary battery of an example of an embodiment.

### DESCRIPTION OF EMBODIMENTS

As a result of intensive studies aimed at increasing the capacity of a non-aqueous electrolyte secondary battery, the present inventors have found that the charge-discharge capacity of the battery significantly increases when a positive electrode active material having a crystal structure belonging to the space group R-3m contains a predetermined amount of Na and a predetermined amount of oxygen deficiency to be introduced. Note that the effect of improving the capacity is not obtained without Na, even if a predetermined amount of oxygen deficiency is present in the positive electrode active material, or without oxygen deficiency, even if a predetermined amount of Na is present therein.

The introduction of oxygen deficiency into the layered rock-salt structure belonging to the space group R-3m is considered to improve the electronic conductivity of the positive electrode active material. On the other hand, the crystal structure becomes unstable due to the introduction of oxygen deficiency. It is considered that a predetermined amount of Na suppresses destabilization of the structure. That is, the introduction of oxygen deficiency into a composite oxide having a layered rock-salt structure containing a predetermined amount of Na yields a positive electrode active material having high electronic conductivity and excellent structural stability, for example. According to the positive electrode active material of the present disclosure, the charge-discharge capacity of the non-aqueous electrolyte secondary battery can be significantly improved.

Hereinafter, an example of embodiments of the positive electrode active material for a non-aqueous electrolyte secondary battery according to the present disclosure and the non-aqueous electrolyte secondary battery using this positive electrode active material will be described in detail with reference to the drawings. The scope of the present disclosure includes configurations composed of selective combinations of constitutional elements of a plurality of embodiments and modified examples described below.

In the embodiment described below, a non-aqueous electrolyte secondary battery 10 being a cylindrical battery in which a wound electrode assembly 14 is housed in a bottomed cylindrical exterior housing can 16 will be exemplified, but the exterior body of the battery is not limited to the cylindrical exterior housing can. Examples of other embodiments of the non-aqueous electrolyte secondary battery according to the present disclosure include: a rectangular battery comprising a rectangular exterior housing can; a coin battery comprising a coin-shaped exterior housing can; and a pouch battery comprising an exterior body constituted with laminated sheets including a metal layer and a resin layer. The electrode assembly is not limited to the wound electrode assembly, and may be a stacked electrode assembly in which a plurality of positive electrodes and a plurality of negative electrodes are alternately stacked via a separator.

FIG. 1 is a sectional view of the non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The non-aqueous electrolyte secondary battery 10 is, for example, a lithium-ion secondary battery. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening portion on one end side in an axial direction, and the opening portion of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte has lithium-ion conductivity. The non-aqueous electrolyte may be a liquid electrolyte (an electrolyte liquid) or may be a solid electrolyte.

The liquid electrolyte (the electrolyte liquid) includes a non-aqueous solvent and an electrolyte salt dissolved in the non-aqueous solvent. For the non-aqueous solvent, esters, ethers, nitriles, amides, and a mixed solvent of greater than or equal to two thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted derivative in which hydrogen of these solvents is at least partially replaced with a halogen atom such as fluorine (for example, fluoroethylene carbonate or the like). For the electrolyte salt, a lithium salt such as LiPF₆ is used, for example. Note that the electrolyte is not limited to the liquid electrolyte, and may be a solid electrolyte using a gel polymer or the like.

As the solid electrolyte, a solid or gel polymer electrolyte, an inorganic solid electrolyte, and the like may be used, for example. For the inorganic solid electrolyte, a known material for an all-solid lithium-ion secondary battery or the like (for example, an oxide-type solid electrolyte, a sulfide-type solid electrolyte, a halogen-type solid electrolyte, and the like) may be used. The polymer electrolyte includes a lithium salt and a matrix polymer, or includes the non-aqueous solvent, the lithium salt, and a matrix polymer, for example. As the matrix polymer, a polymer material that absorbs the non-aqueous solvent to gel is used, for example. Examples of the polymer material include a fluororesin, an acrylic resin, and a polyether resin.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction (longer direction) and a width direction (shorter direction). The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening portion of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening portion of the cap 27.

Hereinafter, the positive electrode 11, the negative electrode 12, and the separator 13, which constitute the electrode assembly 14, specifically the positive electrode 11, will be described in detail.

### [Positive Electrode]

The positive electrode 11 has a positive electrode core and a positive electrode mixture layer disposed on the positive electrode core. For the positive electrode core, a foil of a metal stable within a potential range of the positive electrode 11, such as aluminum, an aluminum alloy, stainless steel, and titanium, a film in which such a metal is disposed on a surface layer thereof, and the like may be used. The positive electrode mixture layer includes a positive electrode active material, a conductive agent, and a binder, and is preferably provided on both surfaces of the positive electrode core. The positive electrode 11 may be produced by, for example, applying a positive electrode mixture slurry including the positive electrode active material, the conductive agent, and the binder on the positive electrode core, and drying and subsequently compressing the coating film to form the positive electrode mixture layer on both the surfaces of the positive electrode core.

Examples of the conductive agent included in the positive electrode mixture layer may include carbon black such as acetylene black and Ketjenblack, graphite, carbon nanotube (CNT), carbon nanofiber, graphene, metal fiber, metal powder, and conductive whisker. The conductive agents may be used singly, or in combination thereof. A content rate of the conductive agent is not particularly limited, but is greater than or equal to 0.1 mass% and less than or equal to 5 mass% relative to a mass of the positive electrode mixture layer, for example.

Examples of the binder included in the positive electrode mixture layer include fluorine-containing resins such as polytetrafluoroethylene (PTFE) and polyvinylidene fluoride (PVDF), olefin resins such as polyethylene, polypropylene, ethylene-propylene-isoprene copolymer, and ethylene-propylene-butadiene copolymer, polyacrylonitrile (PAN), a polyimide, a polyamide, and acrylic resins such as ethylene-acrylic acid copolymer. These resins may be used in combination with carboxymethylcellulose (CMC) or a salt thereof, polyethylene oxide (PEO), or the like. The binders may be used singly, or in combination thereof. A content rate of the binder is not particularly limited, but is greater than or equal to 0.1 mass% and less than or equal to 5 mass% relative to the mass of the positive electrode mixture layer, for example.

The positive electrode active material is a lithium sodium-transition metal composite oxide having a crystal structure belonging to the space group R-3m, the lithium sodium-transition metal composite oxide represented by the compositional formula Li_{g}Na_{β}Ni_{1-b-c}Mn_{b}X_{c}O_{2-d}. In the compositional formula, X represents at least one selected from the group consisting of transition metal elements and main-group elements other than Li, Na, Ni, and Mn, and 0.80 < α ≤ 1.20, 0 < β ≤ 0.20, 0.80 < α + β ≤ 1.20, 0 < 1-b-c ≤ 1, 0 ≤ b < 1, 0 ≤ c < 1, and 0 < d ≤ 0.2 are satisfied. The composite oxide constituting the positive electrode active material contains Li, Na, and Ni as essential elements and preferably further contains Mn. The contents of Li, Na, Ni, Mn, and X contained in the positive electrode active material can be measured using an ICP optical emission spectrometer (for example, CIROS-120, manufactured by SPECTRO).

The positive electrode active material has a layered rock-salt structure belonging to the space group R-3m, contains a predetermined amount of Na, and has d greater than 0 in the compositional formula, that is, the mole ratio (2-d) of O is less than 2.0. When the mole ratio (2-d) of O in the above compositional formula is less than 2.0, indicating that oxygen in the layered rock-salt structure is deficient, a value d is the amount of oxygen deficiency. The presence of a predetermined amount of Na and oxygen deficiency significantly improves the charge-discharge capacity. Note that the oxygen content in the positive electrode active material may be measured using an oxygen-nitrogen analyzer (for example, EMGA-920 manufactured by HORIBA, Ltd.).

In the compositional formula Li_{α}Na_{β}N_{1-b-c}Mn_{b}X_{c}O_{d}, the mole ratio (β) of Na may be greater than 0 and less than or equal to 0.20 (0 < β ≤ 0.20), and is preferably less than or equal to 0.15, more preferably less than or equal to 0.05. It is considered that, when the mole ratio (β) of Na is 0 < β ≤ 0.15, or 0 < β ≤ 0.05, the layered structure of the composite oxide is stable, and the effect of improving the charge-discharge capacity becomes more remarkable. When the mole ratio (β) of Na exceeds 0.20, Na ions may be extracted from the positive electrode during charge, and the extracted Na ions may be occluded in the negative electrode. As a result, a reaction with the non-aqueous electrolyte may occur during charge and discharge to generate a by-product, resulting in a decrease in charge-discharge capacity and charge-discharge efficiency of the battery.

If a very small amount of Na is contained in the positive electrode active material, the layered structure is stabilized, which contributes to an increase in the capacity of the battery, and the mole ratio (β) of Na is preferably greater than or equal to 0.001, more preferably greater than or equal to 0.002. An example of a preferable range of the mole ratio (β) of Na satisfies 0.001 ≤ β ≤ 0.15, or 0.002 ≤ β ≤ 0.05.

In the compositional formula Li_{α}Na_{β}Ni_{1-8-c}Mn_{b}X_{c}O_{d}, a total mole ratio (α + β) of Li and Na may be greater than 0.80 and less than or equal to 1.20 (0.80 < α + β ≤ 1.20), and is preferably less than or equal to 1.05, more preferably less than or equal to 1.00, and may be less than or equal to 0.96. In addition, the total mole ratio (α + β) of Li and Na is preferably greater than or equal to 0.90, more preferably greater than or equal to 0.91, and particularly preferably greater than or equal to 0.92. An example of a preferable range of the total mole ratio (α + β) of Li and Na satisfies 0.90 ≤ α + β ≤ 1.05, 0.91 ≤ α + β ≤ 1.00, or 0.92 ≤ α + β ≤ 0.96. In this case, the effect of improving the charge-discharge capacity becomes more remarkable.

In the compositional formula Li_{α}Na_{β}Ni_{1-8-c}Mn_{b}X_{c}O_{d}, the mole ratio (1-b-c) of Ni may be greater than or equal to 1 (0 < 1-b-c ≤ 1), and is preferably less than or equal to 0.85, and more preferably less than or equal to 0.75. In addition, the mole ratio (1-b-c) of Ni is preferably greater than or equal to 0.30, and more preferably greater than or equal to 0.40. An example of a preferable range of the mole ratio (1-b-c) of Ni satisfies 0.35 ≤ 1-b-c ≤ 0.85, or 0.40 ≤ 1-b-c ≤ 0.75. In this case, the effect of improving the charge-discharge capacity becomes more remarkable.

The positive electrode active material preferably contains Mn as described above. In the compositional formula Li_{α}Na_{β}Ni_{1-b-c}Mn_{b}X_{c}O_{d}, the mole ratio (b) of Mn is preferably less than or equal to 0.75, and more preferably less than or equal to 0.65. In addition, the mole ratio (b) of Mn is preferably greater than or equal to 0.20, and more preferably greater than or equal to 0.25. An example of a preferable range of the mole ratio (b) of Mn satisfies 0.25 ≤ b ≤ 0.65. In this case, the effect of improving the charge-discharge capacity becomes more remarkable.

In the compositional formula Li_{α}Na_{β}N_{1-b-c}Mn_{b}X_{c}O_{d}, X may represent at least one element selected from the group consisting of Mg, Ca, Sr, Ba, Sn, Ti, Si, V, Cr, Fe, Cu, Zn, Bi, Sb, B, Ga, In, P, Zr, Hf, Nb, Ta, Mo, W, Co, and Al. When X is added in a small amount, the effect of improving the charge-discharge capacity becomes more remarkable. The mole ratio (c) of X is preferably less than or equal to 0.05 (0 ≤ c ≤ 0.05), and more preferably less than or equal to 0.03 (0 ≤ c ≤ 0.03).

In the compositional formula Li_{α}Na_{β}N_{1-b-c}Mn_{b}X_{c}O_{d}, X preferably represents at least one selected from the group consisting of Al, Co, and Zr. Among these, Al or Co is preferable. For example, when Al is contained in the positive electrode active material, an example of a preferable range of the mole ratio (c) of Al satisfies 0.005 ≤ c ≤ 0.020.

The positive electrode active material contains, as a main component, a composite oxide (hereinafter referred to as a "Li-Na composite oxide") having a composition represented by the above compositional formula and an oxygen deficiency in the crystal structure. Here the main component means a component having the highest mass ratio among constituent components of the positive electrode active material. In a mixture layer of the positive electrode 11, a composite oxide other than the Li-Na composite oxide may be used in combination as the positive electrode active material, and the content of the Li-Na composite oxide is preferably greater than or equal to 50 mass%, and may be substantially 100 mass%.

The Li-Na composite oxide is formed of, for example, secondary particles each formed by aggregation of a plurality of primary particles. The Li-Na composite oxide has a volume-based median diameter (D50) of greater than or equal to 1 µm and less than or equal to 30 µm, or greater than or equal to 3 µm and less than or equal to 20 µm, for example. The D50 of the composite oxide is a particle diameter at which the volume integrated value is 50% in particle size distribution measured by a laser diffraction scattering method. A BET specific surface area of the Li-Na composite oxide is, for example, greater than or equal to 0.1 m²/g and less than or equal to 10 m²/g, or greater than or equal to 0.5 m²/g and less than or equal to 5 m²/g. The BET specific surface area of the composite oxide is measured according to a BET method (nitrogen adsorption method) described in JIS R1626. When the D50 and the BET specific surface area are within the range, the capacity can be easily increased.

As described above, the Li-Na composite oxide is a composite oxide having an oxygen deficiency in a layered rock-salt structure belonging to the space group R-3m. The Li-Na composite oxide is represented by a compositional formula Li_{α}Na_{β}Ni_{1-b-c}Mn_{b}X_{c}O_{2-d}, wherein 0 < d ≤ 0.2 is satisfied. Although the introduction of oxygen deficiency into a layered rock-salt structure improves the electronic conductivity of the composite oxide but destabilizes the crystal structure, the addition of a predetermined amount of Na is considered to suppress the destabilization of the structure and yield a high-capacity positive electrode active material. Note that a method of introducing oxygen deficiency includes, for example, carrying out long-term calcination during synthesis of the positive electrode active material. However, a high-capacity positive electrode active material is not obtained by a conventional general synthesis method.

The Li-Na composite oxide may include oxygen deficiency in the crystal structure, and in the compositional formula Li_{α}Na_{β}Ni_{1-b-c}Mn_{b}X_{c}O_{2-d}, the mole ratio (2-d) of O is preferably less than or equal to 1.98, more preferably less than or equal to 1.97, and particularly preferably less than or equal to 1.96. That is, the amount of oxygen deficiency (d) is preferably greater than or equal to 0.02, more preferably greater than or equal to 0.03, and particularly preferably greater than or equal to 0.04. A lower limit of the mole ratio (2-d) of O is 1.80, preferably 1.81, more preferably 1.83, and particularly preferably 1.85. That is, the amount of oxygen deficiency (d) is preferably less than or equal to 0.19, more preferably less than or equal to 0.17, and particularly preferably less than or equal to 0.15. When the mole ratio (2-d) of O is less than 1.80, the crystal structure is greatly destabilized, and stability may not be ensured even if Na is added.

In the compositional formula Li_{α}Na_{β}Ni_{1-b-c}Mn_{b}X_{c}O_{2-d}, an example of a preferable range of the mole ratio (2-d) of O satisfies 1.81 ≤ 2-d ≤ 1.98, 1.83 ≤ 2-d ≤ 1.97, or 1.85 ≤ 2-d ≤ 1.96, although the range slightly varies depending on the type of the additive element X, the added amount thereof, and the like. That is, an example of a preferable range of the amount of oxygen deficiency (d) satisfies 0.02 ≤ d ≤ 0.19, 0.03 ≤ d ≤ 0.17, or 0.04 ≤ d ≤ 0.15. In this case, the effect of improving the charge-discharge capacity becomes more remarkable.

A Li-Na composite oxide is produced through (1) a step of mixing and calcinating a sodium raw material and a nickel raw material to synthesize a sodium composite oxide and (2) a step of reacting the sodium composite oxide with a lithium compound to replace a part of Na in the sodium composite oxide with Li. In step (1), a manganese raw material is preferably further added, and a raw material containing an element X may be added. In the synthesis step of the Li-Na composite oxide, synthesis conditions are controlled so that a predetermined amount of oxygen deficiency is introduced, and in step (2), the synthesis conditions are controlled so that a predetermined amount of Na remains. In controlling the amount of oxygen deficiency, for example, calcining conditions in step (1) are important. Note that the oxygen deficiency may be controlled under replacing conditions in step (2).

At least one selected from the group consisting of metallic sodium and a sodium compound is used as the sodium raw material. The sodium compound is not particularly limited as long as it contains Na, and examples thereof include an acetate such as CH₃COONa and CH₃COONa·3H₂O, a nitrate such as NaNO₃, a sulfate such as Na₂SO₄, a carbonate such as Na₂CO₃, a bicarbonate such as NaHCO₃, a hydroxide such as NaOH, and an oxide such as Na₂O and Na₂O₂. Among these, Na₂CO₃, NaHCO₃, NaOH, and NaNO₃ are preferable.

At least one selected from the group consisting of metallic nickel and a nickel compound is used as the nickel raw material. The nickel compound is not particularly limited as long as it contains Ni, and examples thereof include an oxide such as NiO, a hydroxide such as NiOH, Ni(OH)₂, and NiOOH, a nitrate such as NiNO₃, a carbonate such NiCO₃, and Ni₄CO₃(OH)₆(H₂O)₄, and a sulfate such as NiSO₄. Among these, Ni(OH)₂ is preferable.

At least one selected from the group consisting of metallic manganese and a manganese compound is used as the manganese raw material. The manganese compound is not particularly limited as long as it contains Mn, and examples thereof include an oxide such as MnO, Mn₂O₃, Mn₃O₄, and MnO₂, a hydroxide such as Mn(OH)₂ and MnOOH, a carbonate such as MnCO₃, a nitrate such as Mn(NO₃)₂, and a sulfate such as MnSO₄. Among these, Mn(OH)₂ is preferable.

At least one selected from the group consisting of an element X and a compound of the element X is used as the raw material containing the element X. The compound containing element X is not particularly limited as long as it contains X, and examples thereof include an oxide, a hydroxide, a carbonate, a nitrate, and a sulfate. Note that a compound containing Ni or Mn, a compound containing Ni or X, a compound containing Mn or X, or a compound containing Ni, Mn, and X may be used as raw materials for the sodium composite oxide.

The mixing ratio of the raw materials for the sodium composite oxide may be appropriately set without any particular limitation, but for example, in a mixture obtained by mixing the raw materials for the sodium composite oxide, the mixing ratio is preferably set so that 0.95 ≤ a ≤ 1.05, 0.25 < b ≤ 0.65, 0 ≤ c ≤ 0.05, and 0.4 ≤ 1-b-c < 0.75 are satisfied, where the mole ratio of Na is defined as a, the mole ratio of Ni is defined as 1-b-c, the mole ratio of Mn is defined as b, and the mole ratio of element X is defined as c. A method of mixing the raw materials is not particularly limited as long as the raw materials are uniformly mixed, for example, mixing using a known mixing machine such as a mixer can be used to mix.

The mixture of the raw materials is calcined in the atmosphere or in an oxygen stream using a calcining furnace. The calcining temperature is preferably greater than or equal to 700°C and less than or equal to 900°C, and more preferably greater than or equal to 750°C and less than or equal to 850°C. The temperature rising rate is preferably slow, for example, greater than or equal to 0.3°C/min and less than or equal to 5.0°C/min, or greater than or equal to 0.5°C/min and less than or equal to 3.0°C/min. The calcining time is preferably greater than or equal to 20 hours when the calcining temperature is greater than or equal to 750°C and less than or equal to 850°C. Herein, the calcining time means the time from when the temperature of the calcining furnace reaches the calcining temperature above until the calcination is completed and cooling starts. The calcined product is rapidly cooled in the atmosphere by being removed from the calcining furnace.

The oxygen deficiency may be introduced into the Li-Na composite oxide finally obtained by increasing the calcining time in step (1). The amount of oxygen deficiency ((d) in the above compositional formula) is preferably greater than or equal to 0.04 and less than or equal to 0.15 as described above, but when the amount of oxygen deficiency is controlled within this range, the calcining time is preferably greater than or equal to 10 hours and less than or equal to 50 hours, or greater than or equal to 20 hours and less than or equal to 30 hours, at a calcining temperature of greater than or equal to 750°C and less than or equal to 850°C. The sodium composite oxide is obtained, for example, by rapidly cooling the calcined product in the atmosphere, followed by pulverization by a known method.

In step (2), a part of Na in the sodium composite oxide is replaced with Li. That is, it is necessary to perform Li replacement so that a predetermined amount of Na remains. A preferable method of replacing Na with Li includes a method including adding a molten salt bed of a lithium salt to a sodium composite oxide and heating the mixture. For example, at least one selected from the group consisting of lithium nitrate, lithium sulfate, lithium chloride, lithium carbonate, lithium hydroxide, lithium iodide, and lithium bromide is used as the lithium salt.

The heating temperature in the Li replacing step is preferably greater than or equal to 200°C and less than or equal to 400°C, and more preferably greater than or equal to 250°C and less than or equal to 350°C. When the heating temperature exceeds 400°C, the reaction may proceed rapidly, causing a non-uniform reaction. On the other hand, when the heating temperature falls below 200°C, the reaction does not sufficiently proceed, and Na tends to remain in excess. The heat treatment time is set to, for example, greater than or equal to 3 hours and less than or equal to 10 hours after the temperature is increased at a temperature rising rate of greater than or equal to 3.0°C/min and less than or equal to 8.0°C/min to reach the desired heat treatment temperature. Cooling is performed after the heat treatment. Note that a cooling method is not particularly limited, and is, for example, natural cooling (in-furnace cooling). After cooling, the resulting product is thoroughly washed with water, ethanol, methanol, or the like, and dried to obtain a Li-Na composite oxide. The drying after washing is carried out in an atmosphere or vacuum, and is not particularly limited. After washing, heat treatment or washing treatment may be carried out again.

### [Negative Electrode]

The negative electrode 12 has a negative electrode core and a negative electrode mixture layer disposed on the negative electrode core. For the negative electrode core, a foil of a metal stable within a potential range of the negative electrode 12, such as copper, a copper alloy, stainless steel, nickel, and a nickel alloy, a film in which such a metal is disposed on a surface thereof, and the like may be used. The negative electrode mixture layer includes a negative electrode active material and a binder, and is preferably provided on both surfaces of the negative electrode core. The negative electrode 12 may be produced by, for example, applying a negative electrode mixture slurry including the negative electrode active material and the binder on the negative electrode core, and drying and subsequently compressing the coating film to form the negative electrode mixture layer on both the surfaces of the negative electrode core. The negative electrode mixture layer may include a conductive agent such as CNT.

The negative electrode active material is not particularly limited as long as the material reversibly occludes and releases lithium ions, and a carbon material such as graphite is generally used. For the negative electrode active material, an element that forms an alloy with Li, such as Si and Sn, a material containing such an element, and the like may be used. Among these, a silicon-containing material containing Si is preferable. As the negative electrode active material, lithium titanate, which has a higher potential of charge and discharge relative to metal lithium than that of the carbon material and the like, may also be used. The negative electrode active materials may be used singly, or in combination thereof.

The carbon material to function as the negative electrode active material is, for example, at least one selected from the group consisting of natural graphite, artificial graphite, soft carbon, and hard carbon. Among these, artificial graphite such as massive artificial graphite (MAG) and graphitized mesophase-carbon microbead (MCMB), natural graphite such as flake graphite, massive graphite, and amorphous graphite, or a mixture thereof are preferably used. Examples of the silicon-containing material to function as the negative electrode active material include a silicon alloy, a silicon compound, and a composite material containing Si. A preferable silicon-containing material is of composite particles including an ion-conductive phase and Si phases dispersed in the ion-conductive phase.

For the binder included in the negative electrode mixture layer, a fluororesin, an olefin resin, PAN, a polyimide, a polyamide, an acrylic resin, and the like may be used as in the case of the positive electrode 11, and polyvinyl acetate, styrene-butadiene rubber (SBR), and the like may be used. Among these, SBR is preferably used. The binders may be used singly, or in combination thereof. The negative electrode mixture layer preferably includes CMC or a salt thereof, polyacrylic acid (PAA) or a salt thereof, polyvinyl alcohol (PVA), or the like. These materials function as a thickener in the negative electrode mixture slurry. A content rate of the binder is not particularly limited, but is, for example, greater than or equal to 0.1 mass% and less than or equal to 5 mass% relative to the mass of the negative electrode mixture layer.

### [Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. On a surface of the separator 13, a highly heat-resistant resin layer such as an aramid resin may be formed.

On a boundary between the separator 13 and at least one of the positive electrode 11 and the negative electrode 12, a filler layer including an inorganic filler may be formed. Examples of the inorganic filler include oxides containing a metal element such as Ti, Al, Si, and Mg, and a phosphoric acid compound. The filler layer may be formed by applying a slurry containing the filler on the surface of the positive electrode 11, the negative electrode 12, or the separator 13.

### EXAMPLES

Hereinafter, the present disclosure will be further described with Examples, but the present disclosure is not limited to these Examples.

### <Example 1>

### [Production of Positive Electrode Active Material]

A hydroxide containing Ni and Mn at a mole ratio of 1:1 and sodium carbonate were mixed at a mole ratio of Ni:Mn:Na = 0.5:0.5:1.05, and the obtained mixture was heated at a temperature rising rate of 1°C/min, calcined in air at 800°C for 24 hours, and then rapidly cooled in air to obtain a Na-containing composite oxide. Lithium nitrate and lithium chloride were mixed at a mole ratio of 88:12 to prepare a Li-containing molten salt. A Li-containing molten salt and a Na-containing composite oxide were mixed at a mole ratio of Li:Na = 30:1, and the obtained mixture was heated at a temperature rising rate of 5°C/min and heated in air at 280°C for 5 hours. Thereafter, the product was cooled at a temperature falling rate of 2°C/min and washed with a sufficient amount of water, followed by heat treatment in a vacuum at 160°C for 4 hours to obtain a Li-Na composite oxide.

For the resulting Li-Na composite oxide, elements and their contents contained in the Li-Na composite oxide were measured using an ICP optical emission spectrometer (CIROS-120, manufactured by SPECTRO). The oxygen content was also measured using an EMGA-920, manufactured by HORIBA, Ltd. The composition of the Li-Na composite oxide was determined by combining the results of ICP optical emission spectrometry and oxygen content measurement.

### [Production of Positive Electrode]

For the positive electrode active material, the Li-Na composite oxide was used. The positive electrode active material, acetylene black, and polyvinylidene fluoride were mixed at a solid mass ratio of 92:5:3, and N-methyl-2-pyrrolidone (NMP) was used as a dispersion medium to prepare a positive electrode mixture slurry. The positive electrode slurry was applied to a positive electrode core composed of an aluminum foil, and the coating film was dried and then rolled by a rolling roller to obtain a positive electrode in which a positive electrode mixture layer was formed on the positive electrode core.

### [Preparation of Non-Aqueous Electrolyte Liquid]

Lithium hexafluorophosphate (LiPF₆) was dissolved in a mixed solvent of fluoroethylene carbonate (FEC) and methyl propionate (FMP) at a volume ratio of 1:3 so that the concentration was 1 mol/liter to prepare a non-aqueous electrolyte liquid.

### [Production of Test Cell]

For the negative electrode, a lithium metal foil was used. The positive electrode and the negative electrode were disposed to face each other with a separator interposed therebetween to form an electrode assembly. The electrode assembly and the non-aqueous electrolyte liquid were housed in a coin-shaped exterior housing can, and an opening portion of the exterior housing can was sealed with a gasket and a sealing assembly to prepare a test cell (non-aqueous electrolyte secondary battery).

### <Example 2>

A positive electrode active material and a test cell were produced in the same manner as in Example 1 except that, in the synthesis step of the Na-containing composite oxide, a hydroxide containing Ni and Mn at a mole ratio of 1:1, aluminum nitrate nonahydrate, and sodium carbonate were mixed at a mole ratio of Ni:Mn:Al:Na = 0.4975:0.4975:0.005:1.050.

### <Example 3>

A positive electrode active material and a test cell were produced in the same manner as in Example 1 except that a Na-containing composite oxide synthesized in the same manner as in Example was mixed with lithium hydroxide at a mole ratio of Na:Li = 1:2, and the obtained mixture was heated at a temperature rising rate of 5°C/min, heated in air at 280°C for 5 hours, and then cooled at a temperature falling rate of 2°C/min to obtain a Li-Na mixture.

### <Comparative Example 1>

A hydroxide containing Ni and Mn at a mole ratio of 1:1 and lithium hydroxide were mixed at a mole ratio of Ni: Mn: Li = 0.5:0.5:1.05, and the obtained mixture was heated at a temperature rising rate of 5°C/min, calcined in air at 900°C for 10 hours, and then cooled at a temperature falling rate of 10°C/min to obtain a lithium-transition metal composite oxide. A test cell was produced in the same manner as in Example 1 except that this composite oxide was used for the positive electrode active material.

### <Comparative Example 2>

A positive electrode active material and a test cell were produced in the same manner as in Comparative Example 1 except that the calcining time of the mixture was changed from 10 hours to 100 hours.

### [Evaluation of Discharge Capacity]

Each of the test cells of Examples and Comparative Examples was charged at a constant current of 0.2 C until the battery voltage reached 4.5 V under a condition of 25°C, and then charged at a constant voltage of 4.5 V until the current value reached 0.02 C. The test cells were rested for 20 minutes and then discharged at a constant current of 0.2 C until the battery voltage reached 2.5 V to determine discharge capacities. Table 1 shows the measurement results of the discharge capacity together with the composition of the positive electrode active material.

**[Table 1]**

| | Positive electrode active material | | | | | | Discharge capacity mAh/g |
|---|---|---|---|---|---|---|---|
| | Li | Na | Ni | Mn | Al | O | |
| Example 1 | 0.932 | 0.003 | 0.504 | 0.496 | 0 | 1.852 | 211.7 |
| Example 2 | 0.936 | 0.012 | 0.499 | 0.492 | 0.009 | 1.951 | 222.3 |
| Example 3 | 0.843 | 0.122 | 0.503 | 0.497 | 0 | 1.930 | 209.1 |
| Comparative Example 1 | 1.02 | 0 | 0.500 | 0.500 | 0 | 2.000 | 180.1 |
| Comparative Example 2 | 1.00 | 0 | 0.501 | 0.499 | 0 | 1.958 | 160.8 |

As shown in Table 1, the test cells of Examples all had a higher capacity than the test cells of Comparative Examples. That is, the battery capacity was significantly improved when the positive electrode active material contained a predetermined amount of Na and a predetermined amount of oxygen deficiency introduced. The positive electrode active material without Na content and oxygen defects, such as the positive electrode active material of Comparative Example 1, did not exhibit an increase in the capacity as in the case of using the positive electrode active materials of the Examples.

Even if oxygen defects were present in the positive electrode active material of Comparative Example 2, the absence of Na failed to increase the capacity and even reduced the capacity. Although a predetermined amount of oxygen defects was introduced into the positive electrode active materials of Examples by increasing the calcining time during synthesis of the Na-containing composite oxide, thus greatly contributing to an increase in the capacity of the battery, in the synthesis method of the positive electrode active materials of Comparative Examples, the prolonged calcination caused a reduction in the capacity. It was found that in the positive electrode active materials of Examples, the addition of Al and the like could further increase the capacity, while in the test cells of Comparative Examples, the addition of Al and the like had little effect or even reduced the capacity.

The present disclosure will be further described with the following embodiments.

Constitution 1: A positive electrode active material for a non-aqueous electrolyte secondary battery, the positive electrode active material having a crystal structure belonging to a space group R-3m, and being represented by a compositional formula Li_{α}Na_{β}Ni_{1-6-c}Mn₈X_{c}O_{2-d}, wherein X represents at least one selected from the group consisting of transition metal elements and main-group elements other than Li, Na, Ni, and Mn; and 0.80 < α ≤ 1.20, 0 < β ≤ 0.20, 0.80 < α + β ≤ 1.20, 0 < 1-b-c ≤ 1, 0 ≤ b < 1, 0 ≤ c < 1, and 0 < d ≤ 0.2 are satisfied.

Constitution 2: The positive electrode active material for a non-aqueous electrolyte secondary battery according to Constitution 1, wherein in the compositional formula Li_{α}Na_{β}Ni_{1-6-c}Mn₈X_{c}O_{2-d}, a mole ratio (β) of Na is 0 < β ≤ 0.20, and a total mole ratio (α + β) of Li and Na is 0.80 < α + β ≤ 1.20.

Constitution 3: The positive electrode active material for a non-aqueous electrolyte secondary battery according to Constitution 1 or 2, wherein in the compositional formula Li_{α}Na_{β}Ni_{1-6-c}Mn₈X_{c}O_{2-d}, a mole ratio (2-d) of O is 1.85 ≤ 2-d ≤ 1.96.

Constitution 4: The positive electrode active material for a non-aqueous electrolyte secondary battery according to any one of Constitutions 1 to 3, wherein in the compositional formula Li_{α}Na_{β}Ni_{1-b-c}Mn_{b}X_{c}O_{d}, a mole ratio (1-b-c) of Ni is 0.3 ≤ 1-b-c ≤ 0.9.

Constitution 5: The positive electrode active material for a non-aqueous electrolyte secondary battery according to any one of Constitutions 1 to 4, wherein in the compositional formula Li_{α}Na_{β}Ni_{1-b-c}Mn_{b}X_{c}O_{d}, a mole ratio (1-b-c) of Ni is 0.40 ≤ 1-b-c ≤ 0.75, and a mole ratio (b) of Mn is 0.25 ≤ b ≤ 0.65.

Constitution 6: The positive electrode active material for a non-aqueous electrolyte secondary battery according to any one of Constitutions 1 to 5, wherein in the compositional formula Li_{α}Na_{β}Ni_{1-8-c}Mn₈X_{c}Oa, X represents at least one selected from the group consisting of Mg, Ca, Sr, Ba, Sn, Ti, Si, V, Cr, Fe, Cu, Zn, Bi, Sb, B, Ga, In, P, Zr, Hf, Nb, Ta, Mo, W, Co, and Al.

Constitution 7: The positive electrode active material for a non-aqueous electrolyte secondary battery according to Constitution 6, wherein in the compositional formula Li_{α}NasNi_{1-b-c}Mn_{b}X_{c}O_{d}, X represents at least one selected from the group consisting of Al, Co, and Zr.

Constitution 8: A non-aqueous electrolyte secondary battery, comprising: a positive electrode including the positive electrode active material according to any one of Constitutions 1 to 7; a negative electrode; and a non-aqueous electrolyte.

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket

## Claims

1. A positive electrode active material for a non-aqueous electrolyte secondary battery, the positive electrode active material having a crystal structure belonging to a space group R-3m, and being represented by a compositional formula:
Li_{α}Na_{β}Ni_{1-6-c}Mn₈X_{c}O_{2-d},
wherein X represents at least one selected from the group consisting of transition metal elements and main-group elements other than Li, Na, Ni, and Mn; and 0.80 < α ≤ 1.20, 0 < β ≤ 0.20, 0.80 < α + β ≤ 1.20, 0 < 1-b-c ≤ 1, 0 ≤ b < 1, 0 ≤ c < 1, and 0 < d ≤ 0.2 are satisfied.

2. The positive electrode active material for a non-aqueous electrolyte secondary battery according to claim 1, wherein in the compositional formula Li_{c}Na_{β}Ni_{1-b-c}Mn_{b}X_{c}O_{2-d}, a mole ratio (β) of Na is 0 < β ≤ 0.20, and a total mole ratio (α + β) of Li and Na is 0.80 < α + β ≤ 1.20.

3. The positive electrode active material for a non-aqueous electrolyte secondary battery according to claim 2, wherein in the compositional formula Li_{c}Na_{β}Ni_{1-b-c}Mn_{b}X_{c}O_{2-d}, a mole ratio (2-d) of O is 1.85 ≤ 2-d ≤ 1.96.

4. The positive electrode active material for a non-aqueous electrolyte secondary battery according to claim 3, wherein in the compositional formula Li_{α}Na_{β}Ni_{1-8-c}Mn_{β}X_{c}O_{d}, a mole ratio (1-b-c) of Ni is 0.3 ≤ 1-b-c ≤ 0.9.

5. The positive electrode active material for a non-aqueous electrolyte secondary battery according to claim 4, wherein in the compositional formula Li_{α}Na_{β}Ni_{1-8-c}Mn_{b}X_{c}O_{d}, the mole ratio (1-b-c) of Ni is 0.40 ≤ 1-b-c ≤ 0.75, and a mole ratio (b) of Mn is 0.25 ≤ b ≤ 0.65.

6. The positive electrode active material for a non-aqueous electrolyte secondary battery according to claim 4, wherein in the compositional formula Li_{α}Na_{β}Ni_{1-8-c}Mn_{b}X_{c}O_{d}, X represents at least one selected from the group consisting of Mg, Ca, Sr, Ba, Sn, Ti, Si, V, Cr, Fe, Cu, Zn, Bi, Sb, B, Ga, In, P, Zr, Hf, Nb, Ta, Mo, W, Co, and Al.

7. The positive electrode active material for a non-aqueous electrolyte secondary battery according to claim 6, wherein in the compositional formula Li_{α}Na_{β}Ni_{1-8-c}Mn_{b}X_{c}O_{d}, X represents at least one selected from the group consisting of Al, Co, and Zr.

8. A non-aqueous electrolyte secondary battery, comprising:
a positive electrode including the positive electrode active material according to any one of claims 1 to 7;
a negative electrode; and
a non-aqueous electrolyte.
